# EUROPEAN PATENT SPECIFICATION

(11) **EP 2 007 980 B1**
(45) Date of publication and mention of the grant of the patent: **11.06.2014**
(21) Application number: 07730684.3
(22) Date of filing: 16.04.2007
(51) Int. Cl.: F03B 13/16, F03D 5/04, F03B 13/18

(54) **ARRANGEMENT FOR RECOVERING ENERGY**
ANORDNUNG ZUR RÜCKGEWINNUNG VON ENERGIE
SYSTÈME DE RÉCUPÉRATION D'ÉNERGIE

(30) Priority: 18.04.2006 FI 20065237
(43) Date of publication of application: 31.12.2008
(73) Proprietor: Finn Escone OY, 33880 Lempäälä (FI)
(72) Inventor: RAIKAMO, Esko, FI-33880 Lempäälä (FI)
(74) Representative: Kolster Oy Ab
(86) International application number: PCT/FI2007/050197
(87) International publication number: WO 2007/118936

(56) References cited:
- DE-A1- 19 610 922
- DE-C- 119 310
- GB-A- 628 422
- GB-A- 1 522 661
- JP-A- 2004 176 621
- JP-A- 2004 176 621
- US-A- 1 379 183
- US-A- 2 179 537

## Description

### BACKGROUND OF THE INVENTION

The invention relates to the kind of method of recovering energy of the type described in JP 2004 176621 and US 2 179 537, recovering energy by at least one recovery unit which comprises at least one pontoon, at least one power transmission member and at least one actuator, generating a mutual movement between the pontoon and the actuator, transmitting the mutual movement between the pontoon and the actuator to the actuator by at least one power transmission member, and recovering the mutual movement of the pontoon and the actuator by the actuator.

The invention further relates to a recovery unit for recovering energy which comprises at least one pontoon, at least one power transmission member and at least one actuator, the power transmission member in the recovery unit being arranged to transmit a mutual movement between the pontoon and the actuator to the actuator, and the actuator in the recovery unit being arranged to recover the mutual movement of the pontoon and the actuator,

A problem associated with the existing solutions is that, for example, the structure of the recovery unit is subject to damage in demanding conditions, such as in the desert or the sea.

### BRIEF DESCRIPTION OF THE INVENTION

The object of the present invention is to provide a new and improved recovery unit and a method of recovering energy.

The method according to the invention is characterized in that the pontoon is arranged to move with respect to the control surface so that a mutual movement is generated between the pontoon casing and the actuator, and that the control surface is arranged to return the pontoon to its initial position.

The recovery unit according to the invention is characterized in that the pontoon is arranged to move with respect to the control surface so that the mutual movement is generated between the pontoon casing and the actuator and that the control surface is arranged to return the pontoon to its initial position.

The invention is based on that the method comprises recovering energy by at least one recovery unit which comprises at least one pontoon, at least one power transmission member and at least one actuator, generating a mutual movement between the pontoon and the actuator, transmitting the mutual movement between the pontoon and the actuator to the actuator by at least one power transmission member, and recovering the mutual movement of the pontoon and the actuator by the actuator, the method further comprising arranging the actuator inside the pontoon casing, generating a mutual movement between the pontoon casing and the actuator inside the pontoon, and transmitting the movement to the actuator inside the pontoon by at least one power transmission member to recover the movement.

On the other hand, the invention is based on that the recovery unit for recovering energy comprises at least one pontoon, at least one power transmission member and at least one actuator, the power transmission member in the recovery unit being arranged to transmit a mutual movement between the pontoon and the actuator to the actuator, the actuator being arranged to recover the mutual movement of the pontoon and the actuator, and the actuator being arranged inside the pontoon casing, and a mutual movement being generated between the pontoon casing and the actuator inside the pontoon, the power transmission member being arranged to transmit the movement to the actuator, which is arranged to recover it.

According to an embodiment of the invention, the pontoon is arranged to be moved by waves in water.

According to an embodiment of the invention, the pontoon is arranged substantially totally under the water surface. This provides an advantage that the energy included in the waves may affect the whole area of the pontoon.

According to an embodiment of the invention, the pontoon casing is arranged to be moved by means of wind.

According to an embodiment of the invention, the mutual movement of the pontoon and the actuator is converted into a unidirectional rotational movement.

According to an embodiment of the invention, the movement is transmitted from the actuator to at least one energy converter in connection with the recovery unit where kinetic energy is converted into another kind of energy.

According to an embodiment of the invention, the pontoon is arranged to move with respect to the control surface and simultaneously about its longitudinal axis, which generates a mutual movement between the pontoon casing and the actuator, and the control surface is arranged to return the pontoon to its initial position.

According to an embodiment of the invention, a control surface is arranged in connection with the recovery unit, the control surface comprising a toothed rail, and a toothed rim compatible with the toothed rail arranged on the control surface is arranged on the outer surface of the pontoon.

According to an embodiment of the invention, a control surface comprising a counter surface is arranged in connection with the recovery unit, and at least one wheel compatible with the counter surface arranged on the control surface is arranged in connection with the pontoon.

According to an embodiment of the invention, the control surface is an inclined surface with an adjustable angle of inclination.

According to an embodiment of the invention, the control surface is a planar surface.

According to an embodiment of the invention, the recovery unit comprises a support arm to which the pontoon is arranged to attach, and the pontoon comprises a shaft about which the pontoon casing is made to move.

According to an embodiment of the invention, the power transmission element is arranged inside the pontoon casing, and the actuator and the power transmission element are arranged to move freely.

According to an embodiment, the actuator is a movement converter arranged to convert the movement between the pontoon and the actuator into a unidirectional rotational movement.

According to an embodiment of the invention, at least one energy converter is arranged in connection with the recovery unit for receiving the movement from the actuator and converting kinetic energy into another kind of energy.

According to an embodiment of the invention, the cross section of the pontoon is substantially circular.

According to an embodiment of the invention, the pontoon is an elongated substantially cylindrical object.

According to an embodiment of the invention, the recovery unit is connected in series with at least one other recovery unit.

According to an embodiment of the invention, the recovery unit is connected to a wind power generator.

The different embodiments of the invention provide significant advantages compared to prior art solutions. An advantage is that the actuator is protected inside the pontoon and thus is not damaged so easily due to the stress subjected to it by the environment. Another advantage is that the structure of the recovery unit is relatively simple and thus inexpensive, which enables connecting recovery units to each other into large units, such as energy-recovering breakwaters. A further advantage is that energy can be recovered better than earlier by a recovery unit or units connected to each other.

### BRIEF DESCRIPTION OF THE FIGURES

The invention will now be described in greater detail by means of preferred embodiments with reference to the accompanying figures, of which
Figures 1a and 1b schematically illustrate a wave propagating in water and movement of water molecules in water,
Figure 2 illustrates a recovery unit according to an embodiment of the invention,
Figures 3a and 3b illustrate principles of movement converters according to embodiments of the invention,
Figures 4a, 4b, 4c and 4d illustrate recovery units according to embodiments of the invention,
Figure 5 illustrates a recovery unit according to an embodiment of the invention,
Figure 6 illustrates a recovery unit according to an embodiment of the invention,
Figure 7 illustrates a recovery unit according to an embodiment of the invention, and
Figure 8 illustrates a recovery unit according to an embodiment of the invention.

The figures illustrate embodiments of the invention in a simplified manner for the sake of clarity. In the figures, similar parts are denoted by the same reference numbers.

### DETAILED DESCRIPTION OF THE INVENTION

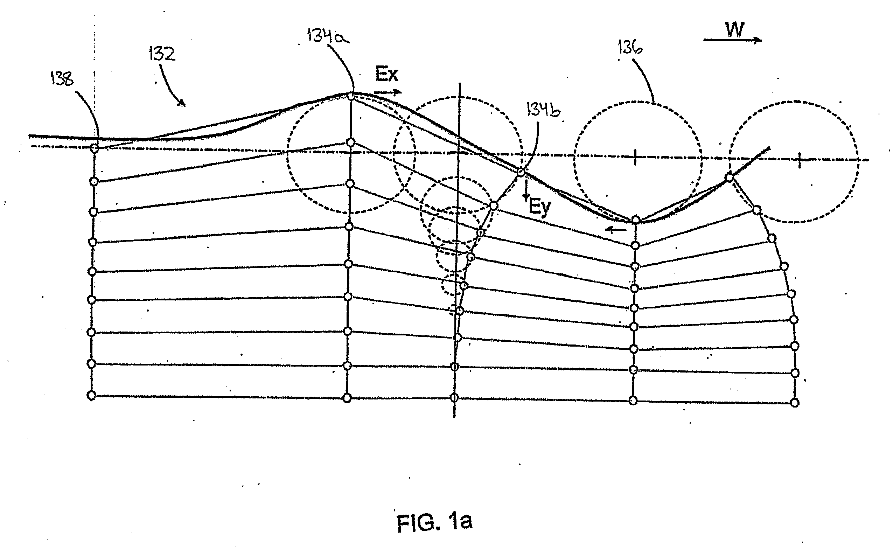

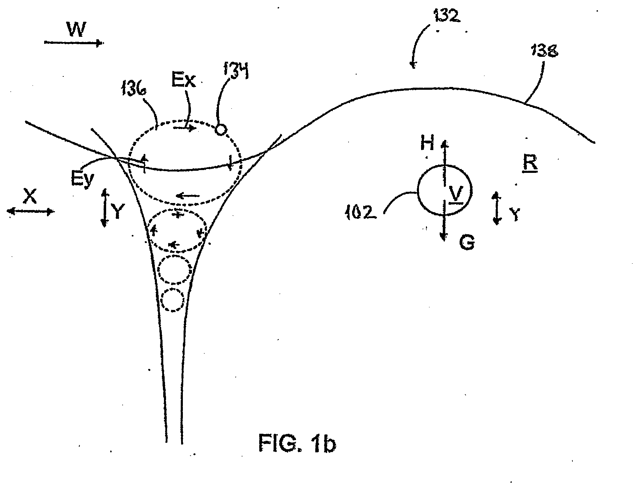

Waves 132 illustrated in Figures 1 a and 1b contain both potential energy Ey and kinetic energy Ex. The potential energy Ey is generated because the height of water molecules varies in the vertical direction Y. The kinetic energy Ex is generated because the water molecules 134 move back and forth horizontally. When a water molecule 134 is close to the trough of the wave 132, it has a small potential energy Ey and a large kinetic energy Ex. In the case of a water molecule 134 on the crest of the wave 132, the situation is the opposite. Due to the influence of these two simultaneous energies Ex, Ey, the water molecules 134 move along a curved track 136 having the shape of a circle or an ellipse. This movement of water molecules 134 extends to a certain distance towards the bottom from the water surface 138. The fact how deep the movement of the water molecules extends depends on how long the distance from the surface 138 to the bottom is. For example, in the area of "free" water, where the distance to the bottom is large, the curved track 136 may have a substantially circular shape and it may extend relatively deep into the water mass. Instead, in the area of shallow water, the bottom influences the movement of water molecules 134 so that the curved track 136 may have an elliptical shape.

Figure 1b further illustrates a pontoon 102 which is subjected to gravitation G in direction Y. On the other hand, the pontoon 102 in water is subjected to buoyant force H, whose magnitude depends on the pontoon 102 volume V and water density R. The deeper in water the pontoon is at a given time, the greater the buoyant force H. The fact how deep in water the pontoon is can be influenced by adjusting the pontoon's 102 mass. It is most advantageous to arrange the pontoon 102 in water so that it is substantially totally under the water surface 138. In that case, its total area may be influenced by the energies the waves contain. On the other hand, the force acting on the pontoon is at its greatest in the surface layers of water since the energy bound to the water molecules 134 decreases in relation to the distance from the surface 138. Even though the pontoon 102 is to be kept continuously and substantially totally under the water surface, in some situations part of the pontoon 102 may temporarily rise above the water surface.

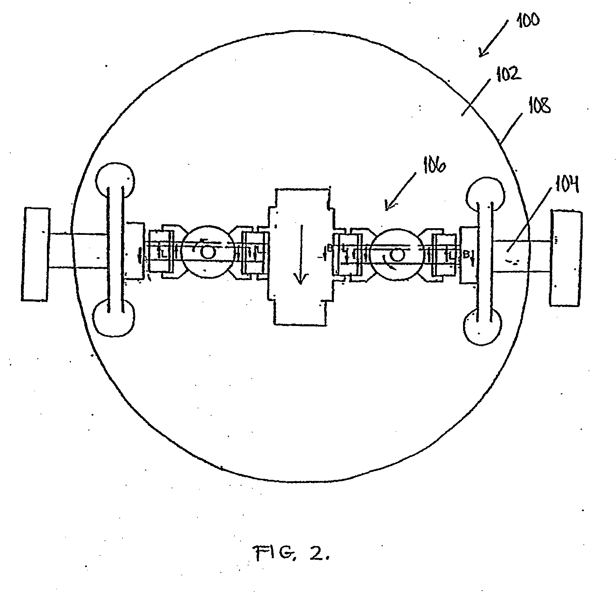

Figure 2 illustrates a recovery unit 100 according to an embodiment of the invention for recovering energy.

The recovery unit 100 comprises a pontoon 102 which may have a longitudinal and substantially cylindrical shape, for instance. Its cross section may be substantially circular or the pontoon 102 may be of any shape suitable for use in a recovery unit 100. The recovery unit also comprises a power transmission member 104, such as a longitudinal shaft, and an actuator 106 arranged inside the pontoon 102 casing 108. The actuator may further comprise a generator or a flywheel, for instance.

The recovery unit may be used for collecting wave energy, for example, in which case the recovery unit is arranged in water either partially or substantially totally under the water surface or substantially above the water surface. Recovery units 100 may be connected in series with one or more other recovery units 100, which intensifies the wave energy collection. Waves generate a mutual movement between the pontoon 102 casing 108 and the actuator 106 inside the pontoon 102, and the movement is transmitted by the power transmission member 104 to the actuator 106 for recovery. The mutual movement may further be transmitted from the actuator 106 to one or more energy converters in connection with the recovery unit 100, which convert kinetic energy into another energy form, such as electric energy. When recovery units 100 are connected in series, each recovery unit 100 may comprise an energy converter of its own or more recovery units 100 may be connected to a common energy converter.

In a recovery unit 100 according to an embodiment of the invention, the mutual movement between the pontoon 102 casing 108 and the actuator 106 is further converted into a unidirectional rotational movement in the movement converter.

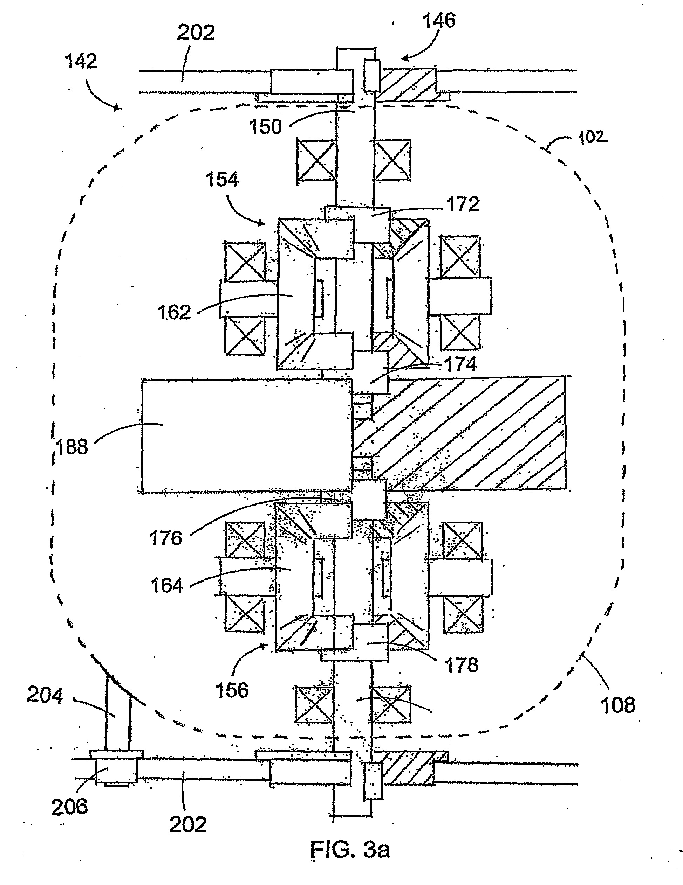

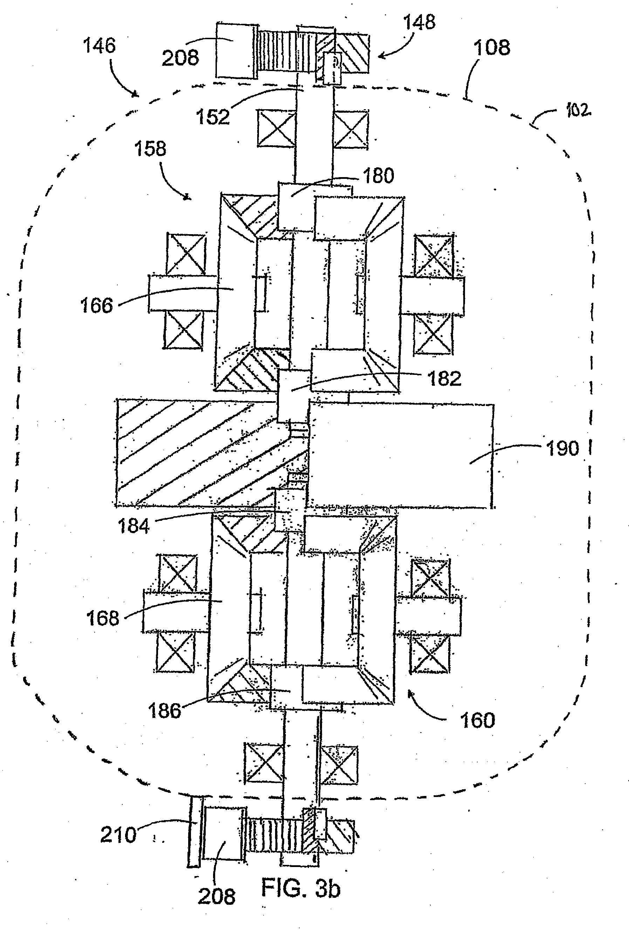

Figures 3a and 3b illustrate the principle of some movement converters 142, 144. The movement converter 142 illustrated in Figure 3a is arranged on rails 202 by rail wheels 146. The rail wheels 146 are fixed to their shaft irrotatably. Supporters 204 for supporting support wheels 206 are attached to the pontoon casing 108. The support wheels 206 are arranged to rotate on the rail 202 so that the support wheel 206 shown in Figure 3a is on the same side of the rail 202 as the rail wheel 146, whereas a support wheel 206 hidden behind the support wheel 206 shown in Figure 3a is on the other side of the rail 202. The support wheels 206 prevent the pontoon casing 108 from rotating with the rail wheel 146. The positioning, number and other similar details of the support wheels may naturally be implemented otherwise. For example, support wheels 206 may be arranged in connection with both rails 202.

In Figure 3b, the movement converter 144 is arranged on a toothed bar 208 by cog wheels 148. The power transmission member 104 of the pontoon 102 may be arranged to rotate the shafts 150, 152 included in the movement converters 142, 144 back and forth. The rotational movement of the shafts 150, 152 is transmitted to direction converting means 154, 156, 158, 160, which may include cog wheels 162, 164, 166, 168. Furthermore, the direction converting means 154 to 160 may include freewheel clutches 172 to 186. This kind of movement converter is disclosed, for instance, in Finnish Patent No. 112 694B, which is incorporated herein by reference. Generators 188, 190 convert the mechanical rotation movement into electric energy. To prevent the pontoon casing 108 from rotating with the cog wheel 148, a projection 210 preventing rotation is attached to the casing 108. The projection slides on the back of the toothed bar 208 as the pontoon 102 moves along the toothed bar 208.

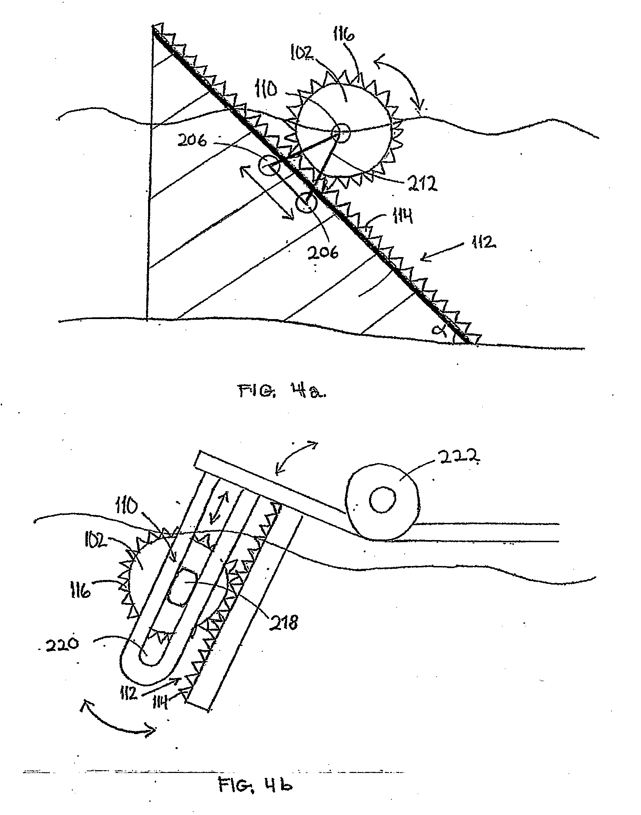

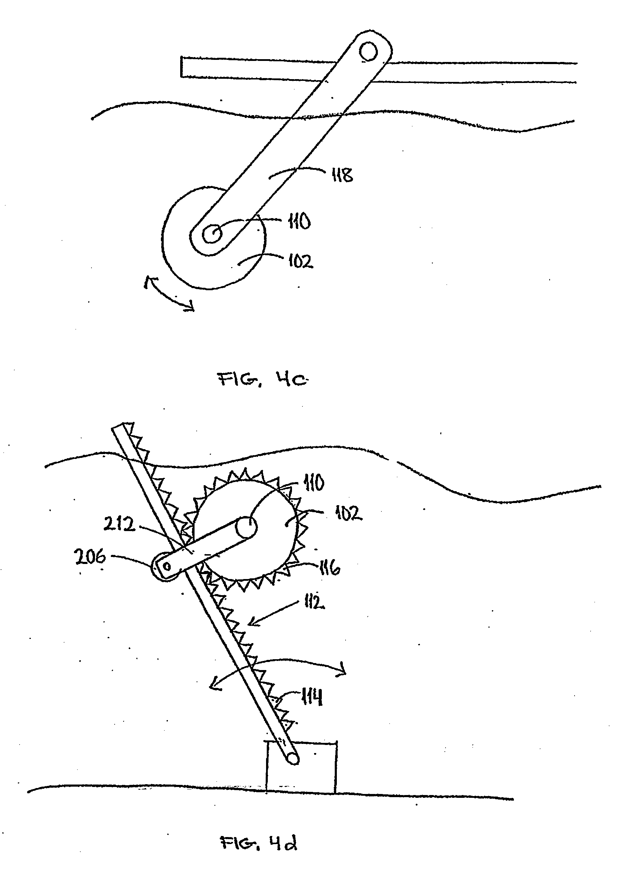

Figures 4a, 4b, 4c and 4d illustrate recovery units according to embodiments of the invention for recovering energy from waves and for utilizing the tidal influence.

In the embodiments illustrated in Figures 4a, 4b and 4d, the pontoon 102 is arranged to move with respect to the control surface 112 so that it simultaneously rotates about its shaft 110 due to the influence of waves or wind, for example. The control surface 112 may comprise a toothed rail 114 and the outer surface of the pontoon 102 a toothed rim 116 compatible with the toothed rail 114. The control surface 112 may further be an inclined surface in accordance with Figure 4a, whose angle of inclination *α* may be adjustable. The control surface 112 may also be a planar surface or the surface may be of any shape allowing the pontoon 102 to move. A mutual movement is generated between the pontoon 102 casing 108 and the actuator 106 as the pontoon 102 moves with respect to the control surface 112. The movement of the casing 108 is transmitted to rotate the actuator by power transmission means known per se. In the solution according to Figure 4a, the control surface 112 returns the pontoon 102 to its initial position. In Figure 4a, the rotation of the power transmission members and the actuator with the pontoon 102 is prevented by an auxiliary body 212 attached to the shaft 110 and by support wheels 206 provided in the auxiliary body. The support wheels 206 are arranged to rotate on the bottom surface of a conductor 214 parallel with the control surface 112.

In Figure 4b, the rotation of the power transmission members and the actuator with the pontoon 102 is prevented by a non-rotation symmetrical controller 218 arranged in the shaft 110. The controller 218 moves in a controller slot 220. The arrangement further includes a joint 222 which allows turning the recovery unit according to the movement of the waves. This improves energy recovery.

In the embodiment illustrated in Figure 4c, the recovery unit 100 comprises a support arm 118 to which the pontoon 102 is attached. The pontoon 102 casing 108 is made to move with respect to the shaft 110 included in the pontoon 102, in which case mutual movement that may be recovered is generated between the pontoon 102 casing 108 and the shaft 110.

In the embodiment illustrated in Figure 4d, the control surface 112 may freely incline at angles of different sizes with respect to its attachment point. The control surface 112 may further preferably rotate about a vertical rotation axis so that the control surface 112 and the pontoon 102 may turn in the direction of the wave movement. In the embodiment illustrated in the figure, the attachment point is at the bottom of a water system but it may naturally be placed elsewhere, for example above the water surface. The rotation of the power transmission members and the actuator with the pontoon 102 is prevented by an auxiliary body 212 attached to the shaft 110 and a support wheel 206 rotating at the back surface of the control surface 112.

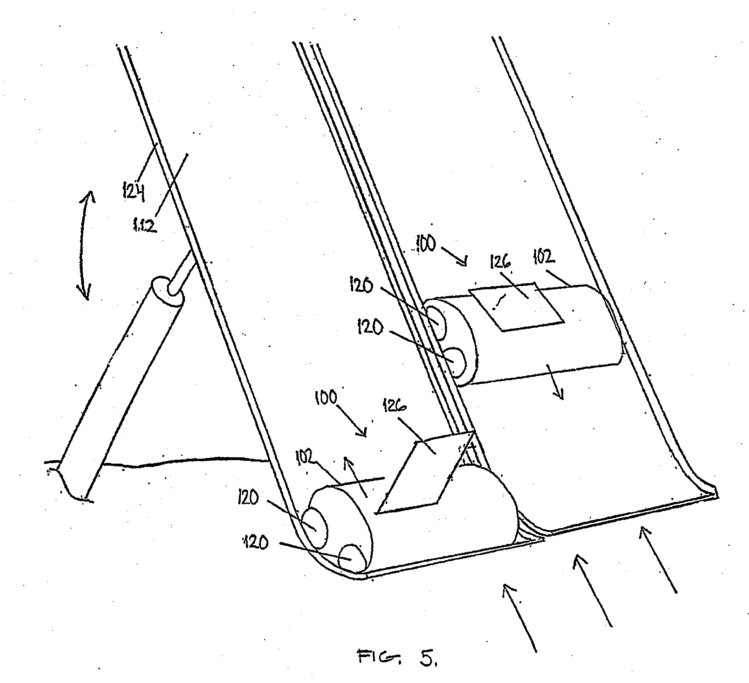

Figure 5 illustrates a recovery unit 100 according to an embodiment of the invention, the recovery unit comprising a pontoon 102 whose outer surface may be provided with one or more wheels 120. A control surface 112 comprising at least one counter surface 124 is arranged in connection with the recovery unit 100. If necessary, the control surface 112 may be very long, for example in the order of one kilometre or even longer. The wheels 120 are compatible with the counter surfaces 124. The pontoon 102 casing 108 is made to move with respect to the wheels 120 and against the inclined control surface112 by means of wind, for example, in which case mutual movement is generated between the pontoon 102 casing 108 and the wheels 120. To intensify the effect of the wind, a planar surface 126, for example, may be arranged in connection with the pontoon 102. The surface functions like a sail in wind facilitating in the vertical position, for example, the rising of the recovery unit 100 upwards against the control surface 112. The sail is in the forward position as the pontoon 102 returns to its initial position. The position of the planar surface 126 may be adjusted to the current wind conditions.

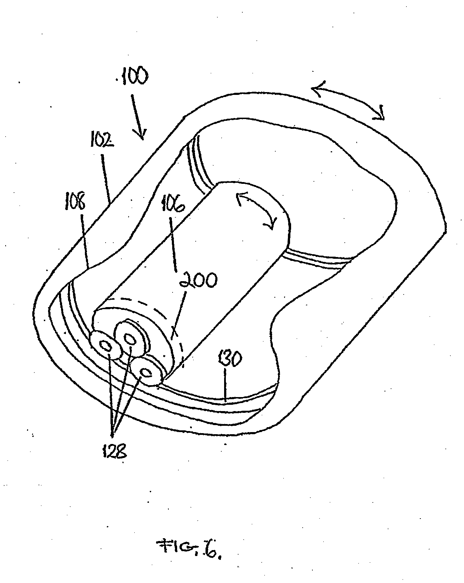

Figure 6 illustrates a recovery unit 100 according to an embodiment of the invention where power transmission members, which in this case include wheels 128, have been arranged inside the pontoon 102 casing 108. The wheels 128 are compatible with the counter surface 130 inside the pontoon 102 casing 108, and the actuator 106 and the power transmission members move freely parallel with the circumference of the casing 108 due to the influence of waves, for example. The recovery unit 100 is preferably anchored by cables or chains to the bottom of the water system, to an attachment point above the water surface, or to an attachment point below the water surface. The anchoring is most preferably implemented so that the recovery unit 100 may assume a most advantageous position in relation to the wave or wind direction and in respect of energy recovery.

In the embodiment of the invention illustrated in Figure 6, the power transmission members include a gear system 200 for changing the transmission ratio between the wheels 128 and the actuator 106. The gear system is a device known per se comprising at least means for producing two different transmission ratios between the wheels and the energy converter. The transmission ratios may be fixed transmission ratios with suitable transmission ratio differences, but preferably the transmission ratio is arranged to be adjusted steplessly by a variator, for example. The selection of the gear system's transmission ratio is preferably controlled according to the movement of the pontoon casing 108 and the rotation speed or resistance of an energy converter connected to the actuator 106, such as an electric generator. When the movement of the pontoon casing 108 is small and/or slow, the transmission ratio is selected to be slow so that a relatively small force is sufficient for rotating the energy converter - even though at a slow speed. When the movement of the pontoon casing 108 increases and/or speeds up, the transmission ratio is selected to be faster, in which case the rotation speed of the energy converter increases in relation to the rotation speed of the wheels 128. The control and adjustment devices needed to control the gear system 200 belong to control techniques known per se, for which reason they will not be discussed in greater detail in this application.

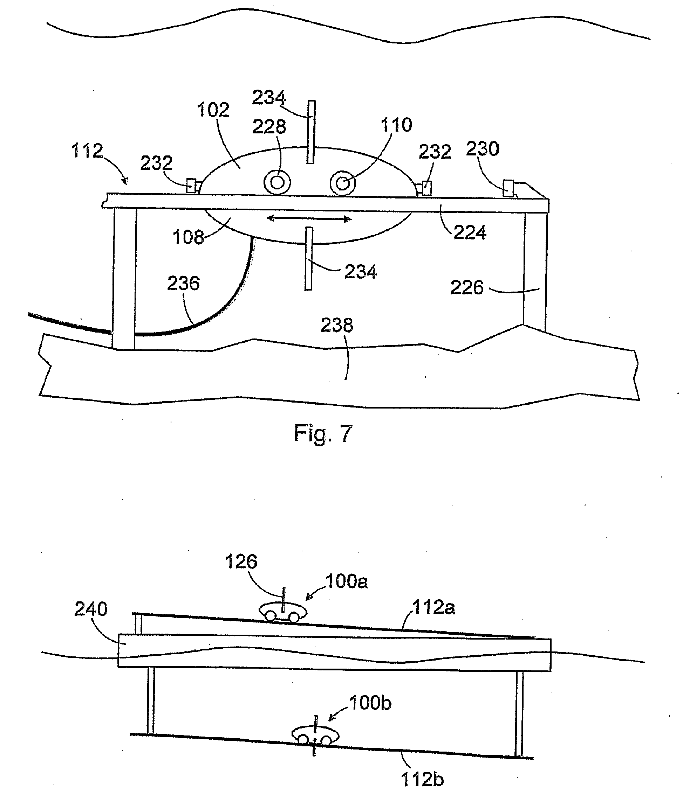

Figure 7 illustrates a recovery unit according to an embodiment of the invention. The recovery unit comprises a hollow pontoon 102. Inside the casing 108 of the pontoon, there is provided an actuator for recovering energy as described in connection with the previous figures. The actuator is connected to a shaft 110, whose rotation movement is transmitted to the actuator which is arranged to rotate an electric generator. The pontoon 102 is arranged to move under water and back and forth along rails 224 arranged substantially in the horizontal direction. The rails 224 form a control surface 112 of the pontoon. The pontoon 102 comprises rail wheels which rotate on the rails 224. In addition to the rail wheel connected to the shaft 110, the pontoon 102 comprises another pair of rail wheels 228 which supports the pontoon 102 on the rails 224.

The rails 224 have been arranged in parallel at a distance from each other and supported close to the bottom 238 of the water system by supports 226. A buffer 230 is arranged at the end of the rails 224 to stop the pontoon 102 movement in this direction. There may also be a buffer at the other end of the rails 224 for stopping the movement of the pontoon 102 in this direction. The other end 224 of the rails is not illustrated in the figure. The pontoon 102 is provided with protecting buffers 232 which protect the pontoon when it hits the buffer 230. It should be noted that the buffers 232 are by no means necessary.

The pontoon 102 moves along the rails 224 by the force of water movements. The pontoon 102 is provided with wings or sails 234 to intensify the pontoon 102 movement with water movements. The linear movement of the pontoon 102 rotates the shaft 110 and the actuator connected thereto and further the electric generator or another similar device which converts rotation energy into another energy form. The actuator converts the to-and-fro rotational movement of the shaft 110 into a unidirectional rotational movement as described above. The electric energy produced by the electric generator is transmitted further by a conductor 236, for instance. Since the pontoon 102 operates deep in the vicinity of the bottom 238, it is well protected from storms and ice.

The other end 224 of the rails may be led to the shore, in which case the pontoon 102 may be pulled along the rails 224 to the dry land for maintenance or to protect it from a storm. In that case, any buffer at the other end of the rails 224 may be moved aside so that it is not in the way of the pontoon 102. In an embodiment of the invention, there is not buffer at all at the other end of the rails 224, but the pontoon 102 movement is restricted in a suitable manner by ascending rails 224. In a third embodiment, the both ends of the rails 224 are arranged to ascend in an appropriate manner, in which case the increasing potential energy of the pontoon 102 stops its movement. In a fourth embodiment, the control surface 112 is arranged in an inclined position and the pontoon 102 moves, forced by the water movement, upwards along the surface. When the water movement slows down and the gravitation overcomes the force caused by the water movement, the pontoon 102 moves along the control surface 112 towards the lowest point of the control surface 112. The rotational movement of the shaft, which preferably takes place in both directions, is utilized in producing energy. The principles of this embodiment are thus similar to those of the embodiment illustrated in Figure 5.

One or both of the rails 224 may be replaced with a toothed bar and the respective rails wheels with cog wheels. The pontoon 102 may be provided with means, such as brushes or the like, for cleaning the rail and/or toothed bar in front of the rail wheels and/or cog wheels.

According to a preferred embodiment, the recovery unit may be connected to any energy recovery unit, such as a wind power generator.

Figure 8 illustrates a recovery unit according to an embodiment of the invention. This comprises a floating and movable raft 240, whose upper surface is provided with a first control surface 112a and the lower surface with a second control surface 12b. A first recovery unit 100a moves on the first control surface 112a. The recovery unit moves upwards along the inclined control, surface by the wind force and returns towards the lowest point of the control surface when wind slows down sufficiently or when the planar surface 126 is turned away from the wind. A second recovery unit 100b moves on the second control surface 11b. The recovery unit moves upwards along the inclined control surface by the force of water movement and returns towards the lowest point of the control surface when the water movement slows down sufficiently. The raft 240 may naturally also be implemented so that it comprises only one or more first control surfaces 112a and recovery units 100a, or only one or more second control surfaces 112b and recovery units 100b. The inclination of the control surfaces 112a, 112b is preferably adjustable. The raft 240 may be attached to the shore or to the bottom of the water system. The attachment is preferably implemented so as to allow the raft 240 to turn freely in the direction of the wind and/or the water movement.

It will be obvious to a person skilled in the art that as the technology advances, the inventive concept may be implemented in various ways. In some cases, the features described in this application may be used as such, regardless of the other features. On the other hand, if necessary, the features described in this application may be combined into different combinations. The invention and its embodiments are thus not limited to the examples described above that are intended to illustrate the invention, but the invention may vary within the scope of the claims. The recovery unit may be provided with means for placing the pontoon and its contents deeper than its normal depth of operation in the water system. This allows protecting the pontoon from storms and ice, for instance. The means may be based on the fact that the buoyant force of the pontoon can be decreased by letting water inside it and by pumping it out of the pontoon when the recovery unit is raised to its optimal depth for energy recovery. The pontoon may also be pulled deeper into the water system by engine power, in which case the buoyant force caused by the pontoon is overcome by engine power. The recovery unit may also be provided with a control system of the pontoon displacement for keeping the pontoon continuously at the optimal depth in a water system regardless of variations in density due to temperature changes or the like. The displacement control system comprises sensors for measuring the pontoon position with respect to the water surface or for measuring water density. On the basis of the information provided by the sensors, the control unit of the control system determines whether an adjustment is necessary and controls actuators that let water into a control tank in the pontoon or remove water from the tank so that the pontoon's buoyant force is appropriate. In addition to an electric generator preferably arranged inside the pontoon casing 108, the unidirectional rotational movement generated by the actuator 106 may be transmitted to a hydraulic pump, which converts the rotational movement into pressure of a fluid medium. The hydraulic pump is also preferably arranged inside the pontoon casing 108. The pontoon 102 may include both an electric generator and a hydraulic pump which are rotated either by one and the same actuator 106 or alternatively the electric generator is rotated by one actuator and the hydraulic pump by another actuator.

## Claims

1. A method of recovering energy, the method comprising:
recovering energy by at least one recovery unit (100) which comprises:
at least one pontoon (102),
at least one power transmission member (104), and
at least one actuator (106);
generating a mutual movement between the pontoon (102) and the actuator (106);
transmitting the mutual movement between the pontoon (102) and the actuator (106) to the actuator (106) by at least one power transmission member (104);
recovering the mutual movement of the pontoon (102) and the actuator (106) by the actuator (106);
generating a mutual movement between the pontoon (102) casing (108) and the actuator (106) inside the pontoon (102); and
transmitting the movement by at least one power transmission member (104) to the actuator (106) for recovery of the movement;
arranging the pontoon (102) to move with respect to the control surface (112) so that the mutual movement is generated between the pontoon (102) casing (108) and the actuator (106);
arranging the control surface (112) to return the pontoon (102) to its initial position, **characterized by**
arranging the actuator (106) inside the pontoon (102) casing (108);
and
rotating an electric generator by the actuator (106), said electric generator arranged inside the pontoon (102) casing (108).

2. A method according to claim 1, **characterized by** arranging the pontoon (102) to be moved by waves in water.

3. A method according to claim 2, **characterized by** arranging the pontoon (102) substantially totally under the water surface.

4. A method according to any one of the preceding claims, **characterized by** converting the mutual movement between the pontoon (102) and the actuator (106) into a unidirectional rotational movement.

5. A recovery unit for recovering energy, comprising:
at least one pontoon (102),
at least one power transmission member (104); and
at least one actuator (106); and
the power transmission member (104) in the recovery unit (100) being arranged to transmit a mutual movement between the pontoon (102) and the actuator (106) to the actuator (106); and
the actuator (106) in the recovery unit (100) being arranged to recover the mutual movement between the pontoon (102) and the actuator (106);
a mutual movement being generated between the pontoon (102) casing (108) and the actuator (106) inside the pontoon (102), the power transmission member (104) being arranged to transmit the movement to the actuator (106), which is arranged to recover it;
the pontoon (102) is arranged to move with respect to the control surface (112) so that the mutual movement is generated between the pontoon (102) casing (108) and the actuator (106);
the control surface (112) is arranged to return the pontoon (102) to its initial position, **characterized in that**
the actuator (106) being arranged inside the pontoon (102) casing (108); and
an electric generator arranged inside the pontoon (102) casing (108), the actuator being arranged to rotate said electric generator.

6. A recovery unit according to claim 5, **characterized in that** a control surface (112) is arranged in connection with the recovery unit (100), the control surface comprising a toothed rail (114); and that the power transmission member (104) comprises a cog wheel (148), which is arranged in contact with the toothed rail (114), a toothed rim (116) compatible with the toothed rail (114) arranged on the control surface is arranged on the outer surface of the pontoon (102).

7. A recovery unit according to claim 5, **characterized in that** a control surface (112) comprising a counter surface (124) is arranged in connection with the recovery unit (100); and the pontoon is provided with at least one wheel (120) compatible with the counter surface (124) arranged on the control surface (112).

8. A recovery unit according to claim 6 or 7, **characterized in that** the control surface (112) is an inclined surface whose angle of inclination is adjustable.

9. A recovery unit according to claim 5, **characterized in that** the power transmission member (104) is arranged inside the pontoon (102) casing (108); and the actuator (106) and the power transmission member (104) are arranged to move freely in the direction of the casing (108) circumference along a counter surface (130) arranged inside the pontoon (102).

10. A recovery unit according to any one of claims 5 to 9, **characterized in that** the actuator (106) is a movement converter (142) which is arranged to convert the movement between the pontoon (102) and the actuator (106) into a unidirectional rotational movement.

11. A recovery unit according to any one of claims 5 to 10, **characterized in that** the recovery unit (100) is connected in series with at least one other recovery unit (100) to form an energy-recovering breakwater.

12. A recovery unit according to any one of claims 5 to 11, **characterized in that** the recovery unit (100) is connected to a wind power generator.

13. A recovery unit according to any one of claims 5 to 12, **characterized in that** the power transmission members (104) comprise a gear system (200) which is arranged to produce at least two different transmission ratios for the movement between the pontoon casing (108) and the actuator (106).

14. A recovery unit according to any one of claims 5 to 13, **characterized in that** it is arranged in a raft (240).

15. A recovery unit for recovering energy, the recovery unit comprising: at least one pontoon (102), at least one power transmission member (104), and at least one actuator (106); and the power transmission member (104) in the recovery unit (100) being arranged to transmit a mutual movement between the pontoon (102) and the actuator (106) to the actuator (106); and the actuator (106) in the recovery unit (100) being arranged to recover the mutual movement between the pontoon (102) and the actuator (106); a mutual movement being generated between the pontoon casing (108) and the actuator (106) inside the pontoon (102), the power transmission member (104) being arranged to transmit the movement to the actuator (106), which is arranged to recover it, **characterized in that** at least part of the pontoon (102) length is arranged to move on a control surface (112) arranged in a horizontal direction so that a mutual movement is generated between the pontoon (102) casing (108) and the actuator (106);
the actuator (106) being arranged inside the pontoon (102) casing (108); and
an electric generator arranged inside the pontoon (102) casing (108), the actuator being arranged to rotate said electric generator.

## Patentansprüche

1. Verfahren zur Rückgewinnung von Energie, wobei das Verfahren umfasst:
Rückgewinnen von Energie mittels mindestens einer Rückgewinnungseinheit (100), was umfasst:
mindestens einen Ponton (102),
mindestens ein Kraftübertragungsglied (104) und
mindestens ein Stellglied (106);
Erzeugen einer gegenseitigen Bewegung zwischen dem Ponton (102) und dem Stellglied (106);
Übertragen der gegenseitigen Bewegung zwischen dem Ponton (102) und dem Stellglied (106) an das Stellglied (106) mittels mindestens eines Kraftübertragungsglieds (104);
Rückgewinnen der gegenseitigen Bewegung des Pontons (102) und des Stellglieds (106) mittels des Stellglieds (106);
Erzeugen einer gegenseitigen Bewegung zwischen dem Gehäuse (108) des Pontons (102) und dem Stellglied (106) innerhalb des Pontons (102); und
Übertragen der Bewegung mittels mindestens eines Kraftübertragungsglieds (104) an das Stellglied (106), um die Bewegung rückzugewinnen;
Einrichten des Pontons (102), sich in Bezug auf die Steueroberfläche (112) zu bewegen, so dass die gegenseitige Bewegung zwischen dem Gehäuse (108) des Pontons (102) und dem Stellglied (106) erzeugt wird;
Einrichten der Steueroberfläche (112), den Ponton (102) zu seiner Ausgangsstellung zurückzuführen, **gekennzeichnet durch**
Anordnen des Stellglieds (106) innerhalb des Gehäuses (108) des Pontons (102) und
Rotieren eines elektrischen Generators mittels des Stellglieds (106), wobei der elektrische Generator innerhalb des Gehäuses (108) des Pontons (012) angeordnet ist.

2. Verfahren gemäß Anspruch 1, **gekennzeichnet durch** Anordnen des Pontons (102), um mittels Wellen in Wasser bewegt zu werden.

3. Verfahren gemäß Anspruch 2, **gekennzeichnet durch** Anordnen des Pontons (102) im Wesentlichen vollständig unter der Wasseroberfläche.

4. Verfahren gemäß einem der vorhergehenden Ansprüche, **gekennzeichnet durch** Umwandeln der gegenseitigen Bewegung zwischen dem Ponton (102) und dem Stellglied (106) in eine unidirektionale Rotationsbewegung.

5. Rückgewinnungseinheit zum Rückgewinnen von Energie, umfassend:
mindestens einen Ponton (102),
mindestens ein Kraftübertragungsglied (104); und
mindestens ein Stellglied (106); und
wobei das Kraftübertragungsglied (104) in der Rückgewinnungseinheit (100) dafür eingerichtet ist, eine gegenseitige Bewegung zwischen dem Ponton (102) und dem Stellglied (106) an das Stellglied (106) zu übertragen; und
wobei das Stellglied (106) in der Rückgewinnungseinheit (100) dafür eingerichtet ist, die gegenseitige Bewegung zwischen dem Ponton (102) und dem Stellglied (106) rückzugewinnen;
eine gegenseitige Bewegung, die zwischen dem Gehäuse (108) des Pontons (102) und dem Stellglied (106) innerhalb des Pontons (102) erzeugt wird, wobei das Kraftübertragungsglied (104) dafür eingerichtet ist, die Bewegung an das Stellglied (106) zu übertragen, das dafür eingerichtet ist, sie rückzugewinnen;
wobei der Ponton (102) dafür eingerichtet ist, sich mit Bezug auf die Steueroberfläche (112) zu bewegen, so dass die gegenseitige Bewegung zwischen dem Gehäuse (108) des Pontons (102) und dem Stellglied (106) erzeugt wird;
wobei die Steueroberfläche (112) dafür eingerichtet ist, den Ponton (102) zu seiner Ausgangsstellung zurückzuführen, **dadurch gekennzeichnet, dass**
das Stellglied (106) innerhalb des Gehäuses (108) des Pontons (102) angeordnet ist; und
einen innerhalb des Gehäuses (108) des Pontons (102) angeordneten elektrischen Generator, wobei das Stellglied dafür eingerichtet ist, den elektrischen Generator zu rotieren.

6. Rückgewinnungseinheit gemäß Anspruch 5, **dadurch gekennzeichnet, dass** eine Steueroberfläche (112) in Verbindung mit der Rückgewinnungseinheit (100) angeordnet ist, wobei die Steueroberfläche ein Zahnschiene (114) umfasst; und dass das Kraftübertragungsglied (104) ein Kammrad (148) umfasst, das in Kontakt mit der Zahnschiene (114) angeordnet ist, wobei eine Zahnleiste (116), die mit der Zahnschiene (114), die auf der Steueroberfläche angeordnet ist, auf der Außenfläche des Pontons (102) angeordnet ist.

7. Rückgewinnungseinheit gemäß Anspruch 5, **dadurch gekennzeichnet, dass** eine Steueroberfläche (112), die eine Gegenoberfläche (124) umfasst, in Verbindung mit der Rückgewinnungseinheit (100) angeordnet ist; und der Ponton mit mindestens einem Rad (120) ausgestattet ist, das mit der Gegenoberfläche (124), die auf der Steueroberfläche (112) angeordnet ist, kompatibel ist.

8. Rückgewinnungseinheit gemäß den Ansprüchen 6 oder 7, **dadurch gekennzeichnet, dass** die Steueroberfläche (112) eine geneigte Oberfläche ist, deren Neigungswinkel einstellbar ist.

9. Rückgewinnungseinheit gemäß Anspruch 5, **dadurch gekennzeichnet, dass** das Kraftübertragungsglied (104) innerhalb des Gehäuses (108) des Pontons (102) angeordnet ist; und das Stellglied (106) und das Kraftübertragungsglied (104) dafür eingerichtet sind, sich frei in Richtung des Umfangs des Gehäuses (108) entlang einer Gegenoberfläche (130), die innerhalb des Pontons (102) angeordnet ist, zu bewegen.

10. Rückgewinnungseinheit gemäß einem der Ansprüche 5 bis 9,
**dadurch gekennzeichnet, dass** das Stellglied (106) ein Bewegungswandler (142) ist, der dafür eingerichtet ist, die Bewegung zwischen dem Ponton (102) und dem Stellglied (106) in eine unidirektionale Rotationsbewegung umzuwandeln.

11. Rückgewinnungseinheit gemäß einem der Ansprüche 5 bis 10,
**dadurch gekennzeichnet, dass** die Rückgewinnungseinheit (100) mit mindestens einer anderen Rückgewinnungseinheit (100) seriell verbunden ist, um einen energierückgewinnenden Wellenbrecher zu bilden.

12. Rückgewinnungseinheit gemäß einem der Ansprüche 5 bis 11,
**dadurch gekennzeichnet, dass** die Rückgewinnungseinheit (100) mit einem Windkraftgenerator verbunden ist.

13. Rückgewinnungseinheit gemäß einem der Ansprüche 5 bis 12,
**dadurch gekennzeichnet, dass** die Kraftübertragungsglieder (104) ein Getriebesystem (200) umfassen, das dafür eingerichtet ist, mindestens zwei unterschiedliche Übertragungsverhältnisse für die Bewegung zwischen dem Pontongehäuse (108) und dem Stellglied (106) hervorzubringen.

14. Rückgewinnungseinheit gemäß einem der Ansprüche 5 bis 13,
**dadurch gekennzeichnet, dass** sie in einem Floß (240) angeordnet ist.

15. Rückgewinnungseinheit zum Rückgewinnen von Energie, die Rückgewinnungseinheit umfassend: mindestens einen Ponton (102), mindestens ein Kraftübertragungsglied (104) und mindestens ein Stellglied (106); und wobei das Kraftübertragungsglied (104) in der Rückgewinnungseinheit (100) dafür eingerichtet ist, eine gegenseitige Bewegung zwischen dem Ponton (102) und dem Stellglied (106) an das Stellglied (106) zu übertragen; und wobei das Stellglied (106) in der Rückgewinnungseinheit (100) dafür eingerichtet ist, die gegenseitige Bewegung zwischen dem Ponton (102) und dem Stellglied (106) rückzugewinnen, wobei eine gegenseitige Bewegung zwischen dem Pontongehäuse (108) und dem Stellglied (106) innerhalb des Pontons (102) erzeugt wird, wobei das Kraftübertragungsglied (104) dafür eingerichtet ist, die Bewegung an das Stellglied (106) zu übertragen, das dafür eingerichtet ist, sie rückzugewinnen, **dadurch gekennzeichnet, dass** mindestens ein Teil der Länge des Pontons (102) dafür eingerichtet ist, sich auf einer Steueroberfläche (112), die in einer horizontalen Richtung angeordnet ist, zu bewegen, so dass eine gegenseitige Bewegung zwischen dem Gehäuse (108) des Pontons (102) und dem Stellglied (106) erzeugt wird;
wobei das Stellglied (106) innerhalb des Gehäuses (108) des Pontons (102) angeordnet ist; und
ein elektrischer Generator innerhalb des Gehäuses (108) des Pontons (102) angeordnet ist, wobei das Stellglied dafür eingerichtet ist, den elektrischen Generator zu rotieren.

## Revendications

1. Procédé de récupération d'énergie, le procédé
comprenant les étapes consistant à :
récupérer de l'énergie par au moins une unité de récupération (100) qui comprend :
au moins un ponton (102),
au moins un élément de transmission d'énergie (104) et
au moins un actionneur (106) ;
générer un mouvement mutuel entre le ponton (102) et l'actionneur (106) ;
transmettre le mouvement mutuel entre le ponton (102) et l'actionneur (106) à l'actionneur (106) par au moins un élément de transmission d'énergie (104) ;
récupérer le mouvement mutuel du ponton (102) et de l'actionneur (106) par l'actionneur (106) ;
générer un mouvement mutuel entre l'enceinte (108) du ponton (102) et l'actionneur (106) à l'intérieur du ponton (102) ; et
transmettre le mouvement par au moins un élément de transmission d'énergie (104) à l'actionneur (106) pour récupérer le mouvement ;
aménager le ponton (102) pour qu'il se déplace par rapport à la surface de commande (112) de sorte que le mouvement mutuel soit généré entre l'enceinte (108) du ponton (102) et l'actionneur (106) ;
aménager la surface de commande (112) pour renvoyer le ponton (102) à sa position initiale, **caractérisé par** les opérations consistant à :
aménager l'actionneur (106) à l'intérieur de l'enceinte (108) du ponton (102) et
faire tourner un générateur électrique par l'actionneur (106), ledit générateur électrique étant aménagé à l'intérieur de l'enceinte (108) du ponton (102).

2. Procédé selon la revendication 1, **caractérisé en ce que** l'on aménage le ponton (102) pour qu'il soit déplacé par les vagues de l'eau.

3. Procédé selon la revendication 2, **caractérisé en ce que** l'on aménage le ponton (102) sensiblement totalement sous la surface de l'eau.

4. Procédé selon l'une quelconque des revendications précédentes, **caractérisé en ce que** l'on convertit le mouvement mutuel entre le ponton (102) et l'actionneur (106) en un mouvement de rotation unidirectionnel.

5. Unité de récupération d'énergie, comprenant :
au moins un ponton (102),
au moins un élément de transmission d'énergie (104) ;
et
au moins un actionneur (106) ;
l'élément de transmission d'énergie (104) de l'unité
de récupération (100) étant aménagé pour transmettre un mouvement mutuel entre le ponton (102) et l'actionneur (106) à l'actionneur (106) ;
l'actionneur (106) de l'unité de récupération (100)
étant aménagé pour récupérer le mouvement mutuel entre le ponton (102) et l'actionneur (106) ;
un mouvement mutuel étant généré entre l'enceinte (108) du ponton (102) et l'actionneur (106) à l'intérieur du ponton (102), l'élément de transmission d'énergie (104) étant aménagé pour transmettre le mouvement à l'actionneur (106) qui est aménagé pour le récupérer ;
le ponton (102) est aménagé pour se déplacer par
rapport à la surface de commande (112) de sorte que le mouvement mutuel soit généré entre l'enceinte (108) du ponton (102) et l'actionneur (106) ;
la surface de commande (112) est aménagée pour ramener
le ponton (102) à sa position initiale, **caractérisée en ce que** :
l'actionneur (106) est aménagé à l'intérieur de
l'enceinte (108) du ponton (102) ; et
un générateur électrique aménagé à l'intérieur de
l'enceinte (108) du ponton (102), l'actionneur étant aménagé pour faire tourner ledit générateur électrique.

6. Unité de récupération selon la revendication 5, **caractérisée en ce qu'**une surface de commande (112) est aménagée en liaison avec l'unité de récupération (100), la surface de commande comprenant un rail denté (114) ; et **en ce que** l'élément de transmission d'énergie (104) comprend une roue dentée (148) qui est aménagée en contact avec le rail denté (114), et un rebord denté (116) compatible avec le rail denté (114) aménagé sur la surface de commande est disposé sur la surface externe du ponton (102).

7. Unité de récupération selon la revendication 5, **caractérisée en ce qu'**une surface de commande (112) comprenant une contre-surface (124) est aménagée en liaison avec l'unité de récupération (100) ; et le ponton est pourvu d' au
moins une roue (120) compatible avec la contre-surface (124) aménagée sur la surface de commande (112).

8. Unité de récupération selon la revendication 6 ou la revendication 7, **caractérisée en ce que** la surface de commande (112) est une surface inclinée dont l'angle d'inclinaison est ajustable.

9. Unité de récupération selon la revendication 5, **caractérisée en ce que** l'élément de transmission d'énergie (104) est aménagée à l'intérieur de l'enceinte (108) du ponton (102) ; et l'actionneur (106) et l'élément de transmission d'énergie (104) sont aménagés pour se déplacer librement dans la direction de la circonférence de l'enceinte (108) le long d'une contre-surface (130) aménagée à l'intérieur du ponton (102).

10. Unité de récupération selon l'une quelconque des revendications 5 à 9, **caractérisée en ce que** l'actionneur (106) est un convertisseur de mouvement (142) qui est aménagé pour convertir le mouvement entre le ponton (102) et l'actionneur (106) en un mouvement de rotation unidirectionnel.

11. Unité de récupération selon l'une quelconque des revendications 5 à 10, **caractérisée en ce que** l'unité de récupération (100) est connectée en série avec au moins une autre unité de récupération (100) pour former un brise-lames de récupération d'énergie.

12. Unité de récupération selon l'une quelconque des revendications 5 à 11, **caractérisée en ce que** l'unité de récupération (100) est connectée à un générateur d'énergie éolienne.

13. Unité de récupération selon l'une quelconque des revendications 5 à 12, **caractérisée en ce que** les éléments de transmission d'énergie (104) comprennent un système d'engrenage (200) qui est aménagé pour produire au moins deux rapports de transmission différents pour le mouvement entre l'enceinte (108) du ponton et l'actionneur (106).

14. Unité de récupération selon l'une quelconque des revendications 5 à 13, **caractérisée en ce qu'**elle est aménagée dans un radeau (240).

15. Unité de récupération pour récupérer de l'énergie, l'unité de récupération comprenant au moins un ponton (102), au moins un élément de transmission d'énergie (104) et au moins un actionneur (106) ; et l'élément de transmission d'énergie (104) de l'unité de récupération (100) étant aménagé pour transmettre un mouvement mutuel entre le ponton (102) et l'actionneur (106) à l'actionneur (106) ; et l'actionneur (106) de l'unité de récupération (100) étant aménagé pour récupérer le mouvement mutuel entre le ponton (102) et l'actionneur (106) ; un mouvement mutuel étant généré entre l'enceinte (108) du ponton (102) et l'actionneur (106) à l'intérieur du ponton (102), l'élément de transmission d'énergie (104) étant aménagé pour transmettre le mouvement à l'actionneur (106), qui est aménagé pour le récupérer, **caractérisée en ce qu'**au moins une partie de la longueur du ponton (102) est aménagée pour se déplacer sur une surface de commande (112) aménagée dans une direction horizontale de sorte qu'un mouvement mutuel soit généré entre l'enceinte (108) du ponton (102) et l'actionneur (106) ;
l'actionneur (106) étant aménagé à l'intérieur de
l'enceinte (108) du ponton (102) ; et
un générateur électrique aménagé à l'intérieur de
l'enceinte (108) du ponton (102), l'actionneur (106) étant aménagé pour faire tourner ledit générateur électrique.
